# EUROPÄISCHE PATENTSCHRIFT

(11) **EP 0 859 680 B1**
(45) Veröffentlichungstag und Bekanntmachung des Hinweises auf die Patenterteilung: **29.12.1999**
(21) Anmeldenummer: 96945529.4
(22) Anmeldetag: 24.10.1996
(51) Int. Cl.: B23K 1/00, B23K 1/018

(54) **VERFAHREN ZUM AUFLÖSEN EINES AUSGEHÄRTETEN GLASLOTES, VERFAHREN ZUM TRENNEN VON MIT EINEM GLASLOT ZUSAMMENGEFÜGTEN BAUELEMENTEN, VERFAHREN ZUM ZERLEGEN EINER BRENNSTOFFZELLE UND VORRICHTUNG ZUM ZERLEGEN EINER BRENNSTOFFZELLE**
METHOD OF DISSOLVING A HARDENED GLASS SOLDER, METHOD OF SEPARATING COMPONENTS JOINED BY A GLASS SOLDER, METHOD OF DISMANTLING A FUEL CELL AND DEVICE FOR DISMANTLING A FUEL CELL
PROCEDE POUR DISSOUDRE UNE SOUDURE DE VERRE DURCIE, PROCEDE POUR SEPARER DES COMPOSANTS ASSEMBLES PAR UNE SOUDURE DE VERRE, PROCEDE ET DISPOSITIF POUR DECOMPOSER UNE PILE A COMBUSTIBLE

(30) Priorität: 06.11.1995 DE 19541299
(43) Veröffentlichungstag der Anmeldung: 26.08.1998
(73) Patentinhaber: SIEMENS AKTIENGESELLSCHAFT, 80333 München (DE)
(72) Erfinder: GREINER, Horst, D-91301 Forchheim (DE); WOHLFART, Manfred, D-91369 Wiesenthau (DE); SCHNÖLLER, Manfred, D-85778 Haimhausen (DE)
(86) Internationale Anmeldenummer: DE9602028
(87) Internationale Veröffentlichungsnummer: WO9717160

(56) Entgegenhaltungen:
- DE-A- 2 233 721
- US-A- 4 769 083

## Beschreibung

Die Erfindung bezieht sich auf ein Verfahren zum Auflösen eines ausgehärteten Glaslotes, auf ein Verfahren zum Trennen von mit einem Glaslot zusammengefügten Bauelementen, auf ein Verfahren zum Zerlegen einer Brennstoffzelle und auf eine Vorrichtung zum Zerlegen einer Brennstoffzelle.

Ein Verfahren zur Auflösung eines Glaslötes ist aus DE-A-2233721 bekannt.

Insbesondere aus dem "Fuel Cell Handbook" von A. J. Appelby und F. R. Foulkes, Van Nostraud Reinhold, 1988, Seiten 442 bis 454, ist bekannt, daß die Bauelemente einer Brennstoffzelle aus Metallegierungen oder Keramik bestehen. Bei einer Hochtemperatur-Brennstoffzelle wird als Material für eine bipolare Platte beispielsweise CrFe5Y₂O₃1 verwendet. Aufgrund der hohen Anforderungen an die zu verwendenden Materialien, wie beispielsweise die mechanische Stabilität bei einer Einsatztemperatur von über 800°C in der Hochtemperatur-Brennstoffzelle, entstehen hohe Materialkosten.

Sich erschöpfende Rohstoffquellen und umweltpolitische Themen machen eine Wiederverwendung der Materialien der Bauelemente notwendig. Zum einen ist die Wiederverwendung des ursprünglichen Bauelementes nach erfolgter Reinigung wünschenswert und zum anderen wird nach erfolgtem Recyclingprozeß das wiedergewonnene Material für die Herstellung eines neuen Bauelementes verwendet.

Bei der Hochtemperatur-Brennstoffzelle sind die einzelnen Bauelemente durch eine glasartige Substanz, beispielsweise ein ausgehärtetes Glaslot, zusammengefügt. Für eine Weiterverwendung der einzelnen Bauelemente oder des Materials, aus dem sich die Bauelemente zusammensetzen, ist eine geeignete Aufbereitung der Bauelemente, bzw. der Hochtemperatur-Brennstoffzelle, notwendig.

Der Erfindung liegen nun die Aufgaben zugrunde, ein Verfahren zum Auflösen eines ausgehärteten Glaslotes, ein Verfahren zum Trennen von mit einem Glaslot zusammengefügten Bauelementen und ein Verfahren zum Zerlegen einer Brennstoffzelle anzugeben. Außerdem soll eine Vorrichtung zum Zerlegen einer Brennstoffzelle angegeben werden.

Die erstgenannte Aufgabe wird gemäß der Erfindung gelöst durch ein Verfahren zum Auflösen eines ausgehärteten Glaslotes, wobei das ausgehärtete Glaslot in einer Schmelze aus einem Hydroxid erwärmt wird.

Die zweitgenannte Aufgabe wird gemäß der Erfindung gelöst durch ein Verfahren zum Trennen von mit einem Glaslot zusammengefügten Bauelementen, wobei das Glaslot in einer Schmelze aus einem Hydroxid erwärmt wird.

Die drittgenannte Aufgabe wird gemäß der Erfindung gelöst durch ein Verfahren zum Zerlegen einer Brennstoffzelle, die durch ein Glaslot zusammengefügte Bauelemente umfaßt, wobei die Brennstoffzelle wenigstens im Bereich dieses Glaslotes in einer Schmelze aus einem Hydroxid erwärmt wird.

Die viertgenannte Aufgabe wird gemäß der Erfindung gelöst durch eine Vorrichtung zum Zerlegen einer mehrere Einheiten enthaltenden Brenstoffzelle, wobei jede dieser Einheiten durch ein Glaslot zusammengefügte Bauelemente umfaßt, mit einer Wanne zur Aufnahme einer Schmelze aus Kaliumhydroxid zum Erwärmen des Glaslotes und einer Halterung zur flächenseitig parallelen Aufnahme der Einheiten, wobei die Halterung in einer über der Wanne angeordneten Hebeeinrichtung gelagert ist, wobei die Einheiten vollständig in der Schmelze aus Kaliumhydroxid eingetaucht sind.

Durch Anwendung dieser Verfahren werden konform zu der heutigen unweltpolitischen Argumentation die Rohstoffquellen für die Materialien der metallischen Bauelemente geschont. Zugleich werden dadurch hohe Materialkosten eingespart, weil die metallischen Bauelemente nach erfolgter Zerlegung wiederverwendet oder zumindest einem Recyclingprozeß zugeführt werden können. Zudem erweist sich diese Verfahren als zeitsparend, da sich bereits nach wenigen Stunden die metallischen Bauelemente voneinander ablösen lassen und einer Endreinigung zugeführt werden können.

Dabei werden die metallischen Bauelemente schonend behandelt, so daß sich ihre Oberflächenstrukturen nach erfolgter Anwendung der Verfahren nicht wesentlich vom ursprünglichen Zustand unterscheiden, als die Bauelemente zum erstenmal in der Brennstoffzelle eingesetzt wurden.

Vorzugsweise wird als Schmelze ein eutektisches Gemisch aus wenigstens zwei Hydroxiden verwendet. Je nach Beschaffenheit des Glaslotes wird die für die Durchführung des Verfahrens geeignete Schmelze ausgewählt.

Insbesondere wird als Hydroxid Kaliumhydroxid oder Lithiumhydroxid verwendet.

In einer weiteren Ausgestaltung wird als Hydroxid Natriumhydroxid verwendet.

Vorzugsweise wird die Schmelze aus Kaliumhydroxid vor dem Erwärmen mit Wasser versetzt. Durch den Zusatz von Wasser erfolgt der Lösungsprozeß in einem niedrigeren technisch leicht zugänglichen Temperaturbereich.

Insbesondere wird die Schmelze aus Kaliumhyddroxid auf eine Temperatur zwischen 250 und 450°C erwärmt. Der hohe Siedepunkt des Kaliumhydroxids erlaubt den Einsatz der Schmelze bei hohen Temperaturen, was zu einer Steigerung der Reaktionsgeschwindigkeit führt. In diesem angegebenen Temperaturintervall erweist sich das Verfahren in der praktischen Erprobung als äußerst erfolgreich und einfach durchzuführen.

In einer weiteren Ausgestaltung wird die Schmelze aus Kaliumhydroxid zwischen 250 und 360°C erwärmt.

Vorzugsweise wird die Schmelze aus Kaliumhydroxid wiederholt abgekühlt und erwärmt. Durch ein- oder mehrfaches Abkühlen und Wiedererhitzen der Schmelze läßt sich der Trennprozeß durch Ausnutzung der mechanischen Spannung bei den auftretenden Temperaturdifferenzen beschleunigen.

Insbesondere sind die Einheiten durch die Hebeeinrichtung innerhalb der Wanne senkrecht zu dem Boden bewegbar. Durch die Bewegung der Einheiten in der Schmelze aus Kaliumhydroxid wird das Verfahren zusätzlich beschleunigt.

Zur weiteren Erläuterung der Erfindung wird auf die Ausführungsbeispiele der Zeichnung verwiesen. Es zeigen:

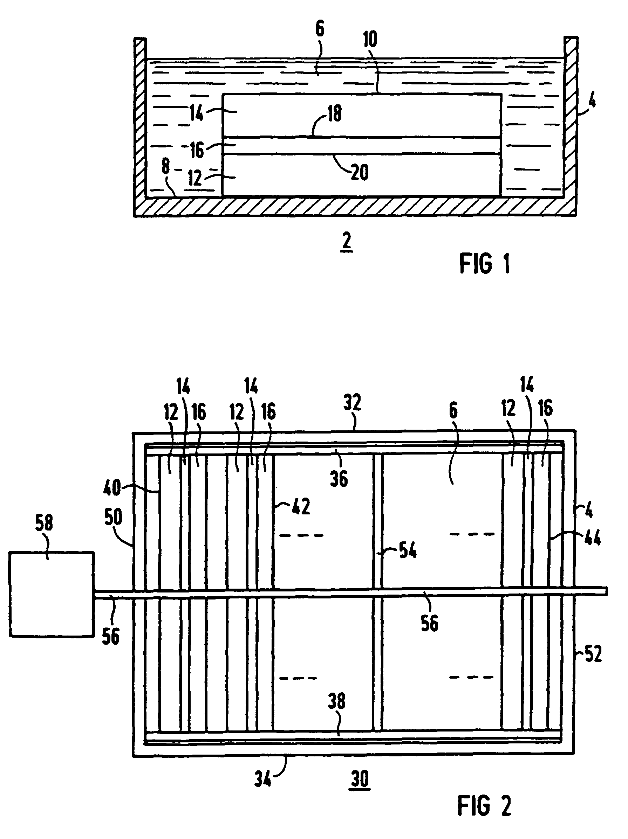

- FIG 1 und 2: Vorrichtungen zum Zerlegen von metallischen Bauelementen in schematischer Darstellung.

Gemäß FIG 1 umfaßt eine Vorrichtung zum Durchführen des Verfahrens zum Auflösen eines ausgehärteten Glaslotes 16 eine Wanne 4, die mit einer Schmelze 6 aus einem Hydroxid, beispielsweise Kaliumhydroxid, gefüllt ist und eine in der Figur nicht näher dargestellte Heizeinrichtung.

Auf dem Boden 8 der Wanne 4 ist eine Einheit 10 angeordnet, die sich aus zwei Bauelementen 12 und 14 zusammensetzt, wobei diese durch das Glaslot 16 zusammengefügt sind. Die Bauelemente 12, 14 können hierbei beispielsweise aus einem Metall oder einer Keramiklegierung bestehen. Dabei handelt es sich beispielsweise um die Bauelemente 12, 14 einer Brennstoffzelle, beispielsweise den bipolaren Platten einer Hochtemperatur-Brennstoffzelle. Diese bipolare Platten können beispielsweise aus CrFe5Y₂O₃1 ausgebildet sein.

Die Einheit 10 ist in der Wanne 4 vollständig von der Schmelze 6 aus Kaliumhydroxid bedeckt. Kaliumhydroxid ist im nichtgeschmolzenen Zustand eine weiße, kristalline Substanz die frei von Wasser und Kaliumcarbonat bei 360°C schmilzt und bei 1324°C siedet.

Vorzugsweise wird die Schmelze 6 bei einer Temperatur zwischen 250 und 450°C verwendet. Die praktische Erprobung des Verfahrens in diesem Temperaturbereich hat sich als erfolgreich erwiesen. Zu dieser Erprobung wurde die Einheit 10, bei der die Bauelemente 12, 14 aus CrFe5Y₂O₃1 ausgebildet sind, etwa 100 Stunden in der kochenden Schmelze 6 aus Kaliumhydroxid bei ca. 250°C ausgelagert. Die Betrachtung der Oberflächen 18, 20 der Bauelemente 14, 12 nach erfolgter Anwendung des Verfahrens zeigte lokale Korrosionsgrübchen mit einer maximalen Tiefe von 20 bis 25µm. Diese lokalen Angriffe können als unkritisch angesehen werden, da die angegriffenen Oberflächen 18, 20 der Bauelemente 12, 14 z.B. mittels Schleifens entfernt werden. Die Funktionsfähigkeit der Bauelemente 12, 14 wird durch diesen Abtrag nicht beeinflußt.

Wir das Verfahren in dem technisch leicht zugänglichen Temmperaturbereich zwischen 250 und 360°C durchgeführt, so wird die Schmelze 6 aus Kaliumhydroxid vor dem Erwärmen mit einer geringen Menge Wasser versetzt. Im allgemeinen genügt bereits das in dem Kaliumhydroxid enthaltene Wasser. Durch vermehrten Zusatz von Wasser wird der Schmelzpunkt des Kaliumhydroxids jedoch weiter heruntergesetzt. Bei einem Zusatz von 20% Wasser verringert sich der Schmelzpunkt des Kaliumhydroxids auf 200°C.

Für eine weitere Beschleunigung der Verfahren wird die Schmelze 6 aus Kaliumhydroxid in der Wanne 4 wiederholt abgekühlt und erwärmt. Durch schnelle Temperaturwechsel treten zusätzliche mechanische Spannungen auf, die das Verfahren beschleunigen.

Als Hydroxid werden außerdem Lithiumhydroxid, Natriumhydroxid oder ein eutektisches Gemisch aus wenigstens zwei Hydroxiden verwendet.

Mit diesem Verfahren können somit Brennstoffzellen, die aus Bauelementen 12, 14 zusammengesetzt sind, zerlegt und nach erfolgter Reinigung einem erneuten Einsatz zugeführt werden.

Eine weitere Vorrichtung 30 zum Zerlegen von Bauelementen ist in FIG 2 in einer Draufsicht gezeigt. In der rechteckigen Wanne 4 ist eine parallel zu den Längsseiten 32 und 34 am Rande verlaufende Halterung 36, 38 angeordnet.

In die Halterung 36, 38 sind die plattenartigen Einheiten 40, 42, 44, die jeweils die durch das Glaslot 16 zusammengefügten Bauelemente 12, 14 umfassen, so eingehängt, daß die Oberflächen 18 und 20 der Bauelemente 14 bzw. 12 senkrecht zu den Längsseiten 32 und 34 der rechteckigen Wanne 4 und parallel zu ihren Stirnseiten 50 und 52 ausgerichtet sind.

Die Halterung 36, 38 ist wiederum in einer über der Wanne 4 angeordneten Hebeeinrichtung 54, 56, 58 gelagert. Die Hebeeinrichtung 54, 56, 58 bewirkt eine Bewegung der Einheiten 40, 42, 44 senkrecht zur Boden 8 der rechteckigen Wanne 4 innerhalb der Schmelze 6 aus Kaliumhydroxid. Durch diese Bewegung wird der Verfahrensprozeß zusätzlich beschleunigt.

## Patentansprüche

1. Verfahren zum Auflösen eines ausgehärteten Glaslotes (16), wobei das ausgehärtete Glaslot (16) in einer Schmelze (6) aus einem Hydroxid erwärmt wird.

2. Verfahren zum Trennen von mit einem Glaslot (16) zusammengefügten Bauelementen (12, 14), wobei das Glaslot (16) in einer Schmelze (6) aus einem Hydroxid erwärmt wird.

3. Verfahren zum Zerlegen einer Brennstoffzelle, die durch ein Glaslot (16) zusammengefügte Bauelemente (12, 14) umfaßt, wobei die Brennstoffzelle wenigstens im Bereich dieses Glaslotes (16) in einer Schmelze (6) aus einem Hydroxid erwärmt wird.

4. Verfahren nach einem der Ansprüche 1, 2 oder 3, bei dem als Schmelze (6) ein eutektisches Gemisch aus wenigstens zwei Hydroxiden verwendet wird.

5. Verfahren nach einem der Ansprüche 1 bis 3, bei dem als Hydroxid (6) Kaliumhydroxid verwendet wird.

6. Verfahren nach einem der Ansprüche 1 bis 3, bei dem als Hydroxid (6) Lithiumhydroxid verwendet wird.

7. Verfahren nach einem der Ansprüche 1 bis 3, bei dem als Hydroxid (6) Natriumhydroxid verwendet wird.

8. Verfahren nach Anspruch 5, bei dem das Kaliumhydroxid vor dem Erwärmen mit Wasser versetzt wird.

9. Verfahren nach Anspruch 8, bei dem die Schmelze (6) aus Kaliumhydroxid vorzugsweise auf eine Temperatur zwischen 250 und 450°C erwärmt wird.

10. Verfahren nach Anspruch 8, bei dem die Schmelze (6) aus Kaliumhydroxid auf eine Temperatur zwischen 250 und 360°C erwärmt wird.

11. Verfahren nach einem der Ansprüche 8 bis 10, bei dem Schmelze (6) aus Kaliumhydroxid wiederholt abkühlt und erwärmt wird.

12. Vorrichtung zum Zerlegen einer mehrere Einheiten (40, 42, 44) enthaltenden Brennstoffzelle, wobei jede dieser Einheiten (40, 42, 44) durch ein Glaslot (16) zusammengefügte Bauelemente (12, 14) umfaßt, mit einer Wanne (4), die mit Aufnahme einer Schmelze (6) aus einem Hydroxid, beispielsweise Kaliumhydroxid zum Erwärmen des Glaslotes (16) und einer Halterung (36, 38) zur flächenseitig parallelen Aufnahme der Einheiten (40, 42, 44), wobei die Halterung (36, 38) in einer über der Wanne (4) angeordneten Hebeeinrichtung (54, 56, 58) gelagert ist und die Einheiten (40, 42, 44) vollständig in der Schmelze (6) aus einem Hydroxid, beispielsweise Kaliumhydroxid eingetaucht sind.

13. Vorrichtung nach Anspruch 12, bei der die Einheiten (40, 42, 44) durch die Hebeeinrichtung (54, 56, 58) innerhalb der Wanne senkrecht zu einem Boden (8) bewegbar sind.

## Claims

1. Method for dissolving a hardened glass solder (16), wherein the hardened glass solder (16) is heated in a melt (6) of a hydroxide.

2. Method for separating components (12, 14) which are joined by means of a glass solder (16), wherein the glass solder (16) is heated in a melt (6) of a hydroxide.

3. Method for disassembling a fuel cell which comprises components (12, 14) joined by means of a glass solder (16), wherein the fuel cell is heated, at least in the region of said glass solder (16), in a melt (6) of a hydroxide.

4. Method according to one of Claims 1, 2 or 3, wherein the melt (6) used is a eutectic mixture of at least two hydroxides.

5. Method according to any one of Claims 1 to 3, wherein the hydroxide (6) used is potassium hydroxide.

6. Method according to any one of Claims 1 to 3, wherein the hydroxide (6) used is lithium hydroxide.

7. Method according to any one of Claims 1 to 3, wherein the hydroxide (6) used is sodium hydroxide.

8. Method according to Claim 5, wherein the potassium hydroxide is admixed with water before it is heated.

9. Method according to Claim 8, wherein the melt (6) of potassium hydroxide is preferentially heated to a temperature of between 250 and 450°C.

10. Method according to Claim 8, wherein the melt (6) of potassium hydroxide is heated to a temperature of between 250 and 360°C.

11. Method according to any one of Claims 8 to 10, wherein the melt (6) of potassium hydroxide is repeatedly cooled and heated.

12. Apparatus for disassembling a fuel cell which contains a plurality of units (40, 42, 44), wherein each of these units (40, 42, 44) comprises components (12, 14) joined by means of a glass solder (16), the apparatus comprising a trough (4) for holding a melt (6) of a hydroxide, for example potassium hydroxide, for heating the glass solder (16), and a mount (36, 38) to accommodate the units (40, 42, 44) so that their faces are parallel, the mount (36, 38) being supported in a lifting means (54, 56, 58) disposed above the trough (4) and the units (40, 42, 44) being completely immersed in the melt (6) of a hydroxide, for example potassium hydroxide.

13. Apparatus according to Claim 12, wherein the units (40, 42, 44) can be moved, by the lifting means (54, 56, 58), within the trough perpendicular to a bottom (8).

## Revendications

1. Procédé de dissolution d'une soudure (16) durcie pour du verre, qui consiste à réchauffer la soudure (16) durcie pour du verre dans un hydroxyde (6) fondu.

2. Procédé de séparation d'éléments (12,14) assemblés par une soudure (16) pour du verre, qui consiste à réchauffer la soudure (16) pour du verre dans un hydroxyde (6) fondu.

3. Procédé de décomposition d'une pile à combustible, qui comprend des éléments (12,14) assemblés par une soudure (16) pour du verre, qui consiste à chauffer la pile à combustible au moins dans la région de cette soudure (16) pour du verre dans un hydroxyde (6) fondu.

4. Procédé suivant l'une des revendications 1, 2 ou 3, qui consiste à utiliser comme hydroxyde (6) fondu un mélange eutectique d'au moins deux hydroxydes.

5. Procédé suivant l'une des revendications 1 à 3, qui consiste à utiliser comme hydroxyde (6) de l'hydroxyde de potassium.

6. Procédé suivant l'une des revendications 1 à 3, qui consiste à utiliser comme hydroxyde (6) de l'hydroxyde de lithium.

7. Procédé suivant l'une des revendications 1 à 3, qui consiste à utiliser comme hydroxyde (6) de l'hydroxyde de sodium.

8. Procédé suivant la revendication 5, qui consiste à mélanger l'hydroxyde de potassium à de l'eau avant le chauffage.

9. Procédé suivant la revendication 8, qui consiste à porter l'hydroxyde (6) de potassium fondu de préférence à une température comprise entre 250 et 450°C.

10. Procédé suivant la revendication 8, qui consiste à porter l'hydroxyde (6) de potassium fondu à une température comprise entre 250 et 360°C.

11. Procédé suivant l'une des revendications 8 à 10, qui consiste à refroidir et à réchauffer l'hydroxyde (6) de potassium fondu de manière répétée.

12. Dispositif de décomposition d'une pile à combustible constituée de plusieurs unités (40,42,44), chacune de ces unités (40,42,44) comprenant des éléments (12,14) assemblés par une soudure (16) pour du verre, comprenant une cuve (4) de réception d'un hydroxyde (16) fondu, de préférence d'hydroxyde de potassium, pour réchauffer la soudure (16) pour du verre et une fixation (36,38) pour recevoir de manière parallèle au côté de la surface les unités (40,42,44), la fixation (36,38) étant montée dans un dispositif (54,56,58) de levage disposé au-dessus de la cuve (4) et les unités (40,42,44) étant complètement plongées dans l'hydroxyde (6) fondu, de préférence dans l'hydroxyde de potassium.

13. Dispositif suivant la revendication 12, par lequel les unités (40,42,44) peuvent être déplacées perpendiculairement à un fond (8) par un dispositif (54,56,58) de levage à l'intérieur de la cuve.
